(19) Europäisches Patentamt
European Patent Office
Office européen des brevets

(11) Numéro de publication : **0 130 850**
**B1**

(12) # FASCICULE DE BREVET EUROPÉEN

(45) Date de publication du fascicule du brevet : **16.06.87**

(51) Int. Cl.[4] : **B 01 J 37/20**

(21) Numéro de dépôt : **84400234.5**

(22) Date de dépôt : **03.02.84**

(54) **Procédé de présulfuration de catalyseur de traitement d'hydrocarbures.**

(30) Priorité : **30.06.83 FR 8311048**

(43) Date de publication de la demande : **09.01.85 Bulletin 85/02**

(45) Mention de la délivrance du brevet : **16.06.87 Bulletin 87/25**

(84) Etats contractants désignés : **BE DE GB IT LU NL**

(56) Documents cités :
**FR-A- 1 381 265**
**FR-A- 1 437 053**
**FR-A- 2 364 689**
**US-A- 3 516 947**

(73) Titulaire : **EURECAT EUROPEENNE DE RETRAITEMENT DE CATALYSEURS**
**Quai Jean Jaurès B.P. 45**
**F-07800 La Voulte-sur-Rhône (FR)**

(72) Inventeur : **Berrebi, Georges**
**12, Allée de la Résidence du Parc**
**F-26000 Valence (FR)**

(74) Mandataire : **Colas des Francs, Jean**
**Institut Français du Pétrole 4, Avenue de Bois Préau**
**F-92502 Rueil-Malmaison (FR)**

**EP 0 130 850 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de présulfuration de catalyseur de traitement d'hydrocarbures et/ou de préconditionnement d'un catalyseur pour être ensuite présulfuré.

Il est souvent souhaitable de procéder à une sulfuration (généralement appelée « présulfuration ») des métaux entrant dans la composition de certains catalyseurs de raffinage et/ou d'hydroconversion d'hydrocarbures soit lorsque ces catalyseurs sont neufs soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou d'hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible. De telles réactions de désulfuration, généralement effectuées en présence d'hydrogène, entre 200 et 400 °C, sous une pression comprise entre par exemple 5 et 60 bars, avec une vitesse spatiale (exprimée en $m^3$ de charge injectée liquide par $m^3$ de catalyseur et par heure) comprise entre 0,5 et 15, avec une pression partielle d'hydrogène comprise entre 4 et 60 bars, la charge étant par exemple une essence distillant généralement entre 30 et 220 °C et pouvant posséder un indice de brome compris entre 40 et 80 (g/100 g), contenant environ 15 à 45 %, en volume, d'oléfines (essentiellement des monooléfines des quantités minimes de dioléfines) et 15 à 25 % d'hydrocarbures aromatiques.

Le catalyseur utilisé pour ce type de désulfuration ou d'hydrodésulfuration renferme un support généralement non acide par exemple une alumine ou des mélanges d'alumine (brevet US-A 4 334 982) ou tout autre support adéquat à base d'au moins un oxyde d'un métal ou de métalloïde (magnésie (US-A 4 132 632, US-A 4 140 626), silice, silice-alumines, silicemagnésies, les silice-fluorées, les alumines bores, les argiles, les charbons, les alumines fluorées) ce ou ces mélanges de support pouvant au moins en partie se présenter sous forme amorphe ou sous forme cristallisée (zéolites) et le catalyseur renfermant en outre 0,2 à 30 % d'au moins un métal actif des groupes VI, VIII ou autre choisi par exemple dans le groupe constitué, par le cobalt, le molybdène, le nickel et le tungstène (US-A 3 732 155 et 3 804 748). On utilise généralement un couple de deux de ces métaux, par exemple l'un des couples cobalt-molybdène, nickel-molybdène, cobalt-tungstène, tungstène-molybdène, cobalt-nickel, nickel-tungstène. On peut toujours à titre d'exemple utiliser un métal noble du groupe VIII de la famille du platine : Pt, Pd.... US-A 4 098 682.

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formule, (selon les métaux présents), $Co_9S_8$, $MoS_2$, $WS_2$ et $Ni_3S_2$.

Cette sulfuration (présulfuration) est effectuée, dans l'art antérieur, à une température voisine ou plus élevée (ainsi supérieure à 180 °C et plus particulièrement au-dessus de 250 °C) par rapport à la température réactionnelle choisie pour la réaction d'hydrodésulfuration, pendant quelques heures, au moyen d'un mélange d'hydrogène sulfuré généralement dilué dans de l'hydrogène (proportion d'hydrogène sulfuré dans l'hydrogène de l'ordre de 0,5 à 5 % en volume) avec une vitesse spatiale adéquate de l'ordre, par exemple, de environ 1 000 à 3 000 litres de gaz dans les conditions normales de température et pression par litre de catalyseur et par heure (US-A 4 334 982). La sulfuration (ou présulfuration) proprement dite peut être effectuée par palier de température (brevet français FR-A 2 476 118). On peut utiliser divers agents de sulfuration, autres que l'hydrogène sulfuré ($H_2S$) et par exemple un composé sulfuré de la famille des mercaptans, le sulfure de carbone ($CS_2$), des sulfures ou des disulfures, les composés thiophéniques et, de préférence le diméthylsulfure (DMS) et le diméthyldisulfure (DMDS). Ainsi le brevet français n° 2 364 689 décrit une présulfuration de catalyseurs au moyen de sulfure de diméthyl ou de sulfure de carbone en solution dans un solvant hydrocarboné.

Une sulfuration ou présulfuration de catalyseur régénéré est également souhaitable dans les réactions d'hydroreformage d'hydrocarbures (reforming notamment d'un naphta) et de production d'hydrocarbures aromatiques (« Aromizing ») par exemple la production de benzène, de toluène et de xylènes (ortho, méta ou para), soit à partir d'essences insaturées ou non (par exemple des essences de pyrolyse, de craquage, en particulier de steam cracking (craquage à la vapeur), ou de reformage catalytique), soit encore à partir d'hydrocarbures naphténiques capables par déshydrogénation de se transformer en hydrocarbures aromatiques.

Les conditions générales de ces réactions sont généralement les suivantes : température moyenne comprise entre 400 et 600 °C, pression comprise entre 1 et 60 bars, vitesse horaire comprise entre 0,1 et 10 volumes de naphta liquide par volume de catalyseur et le taux de recyclage compris entre 0,5 et 20 moles d'hydrogène par mole de charge.

Le catalyseur peut renfermer, par exemple, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc... ou des mélanges

de tels supports). La teneur totale en métaux nobles est comprise par exemple entre 0,1 et 5 % en poids par rapport au catalyseur. Le catalyseur également peut renfermer généralement au moins un halogène (chlore, fluor, etc...) avec une teneur pondérale de 0 à 15 %. Eventuellement encore, le catalyseur renferme au moins un métal promoteur choisi dans les groupes les plus divers de la classification périodique des éléments, la teneur pondérale en métal promoteur variant par exemple entre 0,1 et 15 %. On peut citer ainsi les métaux des groupes VIII, VI A et VI B, I B et II B, III A, IV A, V A et V B, IV B, III B, I A et I B ainsi que les métaux de la famille des lanthanides ; on citera plus particulièrement, outre les métaux du groupe VIII nobles ou non nobles, le cuivre, l'argent, l'or, le germanium, l'étain, l'indium, le thallium, le manganèse, le rhénium, le tungstène, le molybdène, le niobium et le titane.

Pour ces réactions de reformage catalytique ou de production d'hydrocarbures aromatiques, la sulfuration du catalyseur neuf ou régénéré est accompagnée d'une réduction à l'hydrogène de catalyseur et s'effectue en tête du réacteur ou au voisinage de la tête du réacteur. La température dans la zone de sulfuration est imposée par la température à laquelle s'effectue la réduction, soit généralement entre 480 et 600 °C dans la plupart des cas. La difficulté de ce type de sulfuration sur le site, c'est-à-dire au voisinage des réacteurs a entrainé des mises en œuvre de sulfuration souvent fastidieuses quoiqu'efficaces (US-A 4 172 027).

L'agent de sulfuration utilisé est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogène. La pression utilisée est celle qui règne dans le réacteur de reforming ou de production d'hydrocarbures aromatiques, la durée de la réaction variant de quelques minutes à quelques jours selon les conditions opératoires choisies. (voir US-A 4 172 027).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation, de déalkylation, d'hydrodéalkylation, de déalkylation à la vapeur d'eau, d'isomérisation et d'hydrodémétallisation (ou démétallation) des charges lourdes.

La sulfuration ou présulfuration, lorsqu'elle est nécessaire peut s'opérer avantageusement selon l'une ou l'autre des techniques de l'art antérieur rappelés ci-dessus.

Les métaux des catalyseurs utilisés en raffinage, hydroraffinage ou en pétrochimie, qu'ils soient neufs ou régénérés sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en œuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce que permet le procédé original et efficace selon l'invention dans lequel un composé sulfuré est incorporé dans la masse catalytique, lequel composé, provoquera la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur ; le procédé d'incorporation dudit composé sulfuré peut être effectué en hors site également sur un catalyseur neuf ou régénéré, avant sa mise en œuvre dans l'unité industrielle.

D'une façon plus précise, le procédé de sulfuration du catalyseur est donc caractérisée par une étape préliminaire dite d'incorporation dans la masse catalytique, d'un composé sulfuré de nature particulière.

L'étape préliminaire d'introduction d'un composé sulfuré selon l'invention, qu'arbitrairement on appellera prétraitement « hors site » ou « ex situ », qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrira arbitrairement « in situ ») c'est-à-dire en tête des réacteurs ou dans des zones plus ou moins en communication directe avec ces réacteurs, nécessitant d'opérer dans des conditions opératoires, (de température, pression ou autres), imposées au moins en partie par les conditions opératoires des réacteurs eux mêmes ou des annexes de ces réacteurs (zone d'hydrogénation préalable du catalyseur par exemple).

En résumé, l'invention concerne un procédé, permettant, lorsque le catalyseur sera soumis dès son démarrage de préférence sur le site (« in situ ») à la réaction classique d'activation en présence d'hydrogène, (généralement au-dessus de 100 °C), de procéder, ensuite grâce à la présence d'hydrogène sur le site, à la sulfuration au taux requis, stœchiométrique ou non stœchiométrique, du ou des métaux actifs entrant dans la composition du catalyseur. Le procédé consiste à incorporer en l'absence d'hydrogène dans la porosité du catalyseur neuf ou régénéré au moins un agent de sulfuration utilisé en solution dans un solvant, ledit agent de sulfuration ayant la formule générale

$$R—S_{(n)}—R'$$

où R, R' et n sont définis ci-dessous.

La sulfuration du catalyseur peut ainsi être faite comme suit : dans une première étape réalisée « ex-situ », en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R—S_{(n)}—R'$$

où n est un nombre entier de 3 à 20, où R représente un radical organique renfermant 1 à 150 atomes de carbone par molécule, choisi dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, et où R' représente soit un atome d'hydrogène soit un radical organique, défini comme R, identique à R ou différent de R, ledit agent de sulfuration étant utilisé en solution dans un solvant ; dans une deuxième étape, réalisée « in situ », et de préférence au-dessus de 150 °C, on procède à une étape d'activation du catalyseur effectuée en présence d'hydrogène, la quantité requise de soufre se fixant grâce à la présence d'hydrogène, sur le ou les métaux entrant dans la composition dudit catalyseur.

Les inconvénients de la méthode classique de sulfuration « in situ » peuvent se résumer ainsi :

température de travail trop élevée ;

utilisation de produits ($H_2S$, $CS_2$, DMS ou DMDS) malodorants et toxiques ;

risque de passivation du métal par réduction des oxydes avant leur sulfuration ;

impossibilité d'utiliser des charges contenant des oléfines pour éviter tout risque de polymérisation.

difficulté d'utiliser des charges lourdes du type distillat sous vide ou résidus en raison de leur très faible pouvoir mouillant dû à leur grande viscosité ;

durée de la sulfuration (de plusieurs heures à plusieurs jours).

Les avantages du traitement préliminaire d'incorporation selon l'invention d'un composé sulfuré, ex-situ sont par contre les suivants :

température de travail relativement basse (60 à 200 °C) ;

au choix sulfuration complète et homogène du catalyseur ou sulfuration au taux exact demandé de sulfuration ;

pas de risque de provoquer une réduction des métaux oxydés car, selon l'invention, le traitement est effectué en l'absence d'hydrogène ;

manipulation aisée des catalyseurs rendus non pyrophoriques par addition d'eau et/ou d'essence légère ;

aucune mauvaise odeur et aucune toxicité ;

possibilité d'utiliser le catalyseur pour toutes méthodes de chargement dense

économie de temps pour le raffineur et pour l'utilisateur des catalyseurs

activité maximum obtenue dès l'alimentation du réacteur par la charge à désulfurer.

Les recherches effectuées dans le cadre de l'invention, ont conduit à développer une méthode de sulfuration « ex-situ » de catalyseurs neufs ou régénérés, méthode qui a l'avantage de limiter de façon importante les infrastructures industrielles que réclamaient les techniques de présulfuration de l'art antérieur.

L'objet de cette invention est donc de conduire « ex-situ » la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être présulfurés.

Le raffineur, ou tout autre utilisateur, n'aura plus donc qu'à réactiver ce catalyseur en présence d'hydrogène à une température par exemple de 100 à 200 °C pour un catalyseur de désulfuration, de 400 à 600 °C environ, pour un catalyseur de reformage catalytique ou de production d'hydrocarbures aromatiques, afin de faire réagir le soufre sur les métaux contenus et démarrer aussitôt la réaction de raffinage ou de conversion d'hydrocarbures par injection de la charge à traiter.

Le procédé de sulfuration ou présulfuration de catalyseur selon l'invention est donc caractérisé par un prétraitement du catalyseur à l'aide, à titre d'agent de sulfuration d'au moins un polysulfure de formule

$$R—S_{(n)}—R'$$

où n est un nombre entier de 3 à 20, de préférence de 3 à 8 et plus particulièrement de 3 à 7, et où R et R' identiques ou différents représentent des radicaux organiques renfermant chacun 1 à 150 atomes de carbone par molécule, de préférence 10 à 60 atomes de carbone et plus particulièrement 15 à 30, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéro-atome. R' éventuellement peut également être un atome d'hydrogène.

La préparation des polysulfures utilisables dans la présente invention ne comporte pas de difficultés

particulières et a été décrite dans la littérature. notamment dans les brevets français N° 1 381 265 et 1 437 053.

On citera, à titre d'exemple préféré de polysulfure, le ditertiododécylpolysulfure (n = 5) de formule

$$\begin{array}{ccccc} & R'' & & R'' & \\ & | & & | & \\ R'' — & C & — S_{(5)} — & C & — R'' \\ & | & & | & \\ & R'' & & R'' & \end{array}$$

où R" est un radical dodécyle.

Ce produit est commercialisé par exemple par Elf Aquitaine sous le nom TPS 32, notamment parce qu'il contient 32 % poids environ de soufre.

On citera également le ditertiononylpolysulfure (n = 5) de formule

$$\begin{array}{ccccc} & R'' & & R'' & \\ & | & & | & \\ R'' — & C & — S_{(5)} — & C & — R'' \\ & | & & | & \\ & R'' & & R'' & \end{array}$$

où R" est un radical nonyle.

Ce produit est commercialisé par Elf Aquitaine sous le nom TPS 37, notamment parce qu'il contient 37 % poids environ de soufre ou par PENWALT sous le nom de TNPS.

Pour des raisons de procédure, on peut évidemment utiliser ces agents de sulfuration du type polysulfure seul ou en mélange entre eux dans des proportions judicieusement choisies.

Le procédé selon l'invention d'incorporation de soufre dans le catalyseur est effectué en l'absence d'hydrogène et permet d'obtenir avec une très grande précision le degré de sulfuration total ou partiel demandé par l'utilisateur. Cette incorporation de soufre est effectuée entre 0 et 50 °C et de préférence entre 10 et 35 °C et de préférence encore à la température ambiante.

L'agent de sulfuration, conforme à l'invention, permet d'augmenter la densité de remplissage de la porosité du catalyseur, et généralement de 20 % au moins, cela parce que les molécules de ces agents de sulfuration dont les dimensions sont de 5 à 30 Angströms, sont suffisamment grosses pour bloquer tout ou partie de la porosité de ces types de catalyseurs qui est essentiellement située aux environs de 5 à 70 Angströms (microporosité). La sulfuration selon l'invention permet ainsi de fixer sur le catalyseur, avec une grande précision, par dilution avec un solvant choisi, la quantité adéquate de soufre, quantité stœchiométrique par exemple pour des catalyseurs d'hydrodésulfuration et quantités non stœchiométriques mais critiques pour les catalyseurs de reforming ou de production d'hydrocarbures aromatiques, ces quantités critiques dépendant de la nature du métal ou de chacun des métaux entrant dans la composition du catalyseur. (On sait que le soufre est un poison des catalyseurs de reforming et qu'il y a donc lieu de maitriser parfaitement l'incorporation exacte souhaitée de soufre, ce que permet précisément le procédé de l'invention). Le présent procédé permet donc d'effectuer le taux de sulfuration conforme aux vœux de l'utilisateur du catalyseur. L'agent de sulfuration est utilisé, dilué dans un solvant adéquat qui dépend notamment de la nature de l'agent de sulfuration c'est-à-dire de R ou de R', radicaux qui déterminent la teneur en soufre incorporé dans le catalyseur généralement par capillarité ou par porosité. Les processus de sulfuration varient en fait selon les coupes à traiter ultérieurement en présence des catalyseurs traités conformément à l'invention. Le solvant choisi peut être ainsi un des solvants suivants utilisés seuls ou en mélange ensemble :

une essence légère bouillant par exemple entre environ 60 et 95 °C

une essence de type hexane bouillant entre 63 et 68 °C environ

une essence de type F bouillant entre environ 100 et 160 °C et contenant généralement 10 à 20 % d'hydrocarbures aromatiques, par exemple 15 %, (en volume)

une essence de type « white spirit » bouillant entre environ 150 et 250 °C et renfermant généralement 14 à 22 % d'hydrocarbures aromatiques, par exemple 17 %, en volume,

ou toute coupe hydrocarbonée ou non, équivalente aux essences précédentes.

Ainsi conformément à l'invention, on utilise à titre d'agent de sulfuration un composé sulfuré particulier qui va être bloqué dès son introduction dans la masse catalytique. Ultérieurement, « in-situ », c'est-à-dire sur le site ou à proximité du site (sur lequel le catalyseur sera utilisé pour le traitement de diverses charges), lors de la réaction classique d'activation, effectuée en présence d'hydrogène, l'agent de sulfuration introduit dans le catalyseur en quantités prédéterminées, sera capable de donner naissance à de l'hydrogène sulfuré lequel, en présence d'hydrogène, conduira au sulfure ou aux sulfures

désirés du ou des métaux présents dans le catalyseur selon par exemple les réactions exothermiques (1) (2) et (3) suivantes pour ce qui concerne, à titre d'exemples, les sulfurations du molybdène, du cobalt et du nickel :

$$MoO_3 + 2H_2S + H_2 \longrightarrow MoS_2 + 3H_2O + \vec{Q} \quad (1)$$

$$9CoO + 8H_2S + H_2 \longrightarrow Co_9S_8 + 9H_2O + \vec{Q} \quad (2)$$

$$3NiO + 2H_2S + H_2 \longrightarrow Ni_3S_2 + 3H_2O + \vec{Q} \quad (3)$$

L'emploi d'un solvant adéquat, dans lequel est dissous l'agent de sulfuration, permet de jouer sur la chaleur latente de vaporisation du solvant choisi, donc d'absorber une partie au moins de l'exothermicité de la réaction de sulfuration.

A l'issue du dépôt de soufre, une partie au moins du solvant, reste dans le catalyseur mais il n'est pas nécessaire d'éliminer ce solvant (par strippage à l'azote liquide par exemple, ou par tout autre moyen). Ce solvant laissé dans le catalyseur s'éliminera ultérieurement et sans aucun dommage, dans le réacteur d'utilisation du catalyseur, c'est-à-dire sur le site (« in situ »).

Un autre avantage du procédé « ex situ » selon l'invention, est qu'il n'est pas besoin d'utiliser tout de suite de l'hydrogène, d'où l'inutilité ici de manipulation de ce gaz. De l'hydrogène, bien sûr, est nécessaire ensuite pour procéder à l'activation du catalyseur mais cette activation est réalisée sur le site lui-même puisque de toute façon, sur le site, l'emploi d'hydrogène est généralement nécessaire pour le traitement des coupes à traiter en présence du catalyseur présulfuré selon l'invention. On a noté à ce sujet, que l'activation d'un catalyseur présulfuré selon l'invention, donnait des résultats particulièrement avantageux si l'on ajoute à l'hydrogène, en volume, environ 0,1 à 1 % d'eau.

Les tests suivants, donnés à titre d'illustrations non limitatives, font mieux comprendre l'intérêt de l'invention.

On ajoutera que d'une façon générale, la présulfuration des catalyseurs peut être effectuée sur un produit neuf ou régénéré, que cette présulfuration se fait donc par adsorption d'une quantité stœchiométrique, par rapport aux métaux , de polysulfures à haute teneur en soufre, que l'adsorption de ce polysulfure sera facilitée par dilution dans un solvant et notamment dans du white spirit. Le volume de polysulfure et du solvant choisi devant de préférence représenter environ une valeur égale au volume poreux du lit de catalyseur à traiter : Ainsi, à titre d'exemple, pour 100 g de catalyseur régénéré ou neuf (forme oxydée) il s'agit donc de mettre environ 9 grammes de soufre en polysulfure dans environ 45 $cm^3$ de mélange total polysulfure plus solvant (white spirit par exemple). L'adsorption de ce polysulfure se fait généralement à l'air ambiant. Le catalyseur peut ensuite être éventuellement séché sous courant d'air chaud entre 50 et 150 °C (par exemple à 100 °C) puis conditionné pour être expédié, selon une méthode préférée, chez le raffineur.

L'opération d'activation est alors exécutée par le raffineur dans le réacteur où est placé la charge catalytique ainsi présulfurée.

Le lit peut être purgé à l'azote chaud pour éliminer toute présence d'oxygène gazeux pendant le stockage ou le transport du catalyseur. Dans le réacteur de la raffinerie, juste avant d'envoyer la charge à traiter pour démarrer l'activation, on peut faire alors passer un courant d'hydrogène par exemple à 150 °C, avec un débit horaire correspondant par exemple à 40 fois au moins le volume du lit catalytique.

La température va légèrement croître du fait de l'exothermie ; le mélange gazeux qui se crée (le mélange $H_2 + H_2S$ produit) peut éventuellement être recyclé et peut-être utilisé pour limiter la montée en température. La température doit être de préférence supérieure à 100 °C pour éviter toute condensation d'un liquide et inférieure à 200 °C pour éviter tout risque de surchauffe.

Le suivi de la sulfuration se fait par le contrôle des températures, l'évolution de la teneur en $H_2S$, la quantité d'eau recueillie dans le gaz de purge après condensation (au ballon séparateur).

On rappelle ci-dessous les principaux avantages du procédé :

travail de sulfuration s'effectuant à plus basse température ;

manipulation aisée des catalyseurs du fait que l'on n'a pas affaire à des sulfures malodorants ; les polysulfures étant absolument sans odeur et ne présentant aucun caractère toxique ;

sulfuration plus homogène du lit catalytique ;

possibilité d'utiliser les infrastructures des usines de régénération ex-situ des catalyseurs ;

infrastructure industrielle réduite ;

plus de stockage de produit sulfuré difficilement utilisable comme le DMDS ;

temps d'immobilisation des réacteurs réduit ;

pas de risque de réduction des métaux qui entraîne les réactions d'hydrocracking et non les réactions d'hydrodésulfuration désirées et généralement recherchées sélectivement.

dans le cas d'hydroraffinage de coupes lourdes en vue de leur hydrocracking ou de leur démétallisation le raffineur est souvent obligé de présulfurer le catalyseur en utilisant une charge légère qui doit être ensuite stockée. Dans le cadre de cette invention, on n'aura plus besoin de procéder de manière aussi compliquée, puisque le catalyseur sera déjà sulfuré au moment d'envoyer la charge à traiter.

On a également découvert, dans le cadre de la présente invention, un moyen pour accélérer ultérieurement lors de la réactivation du catalyseur par l'hydrogène, la transformation des oxydes des métaux actifs en sulfure de métaux.

Ce moyen consiste à opérer l'incorporation « ex-situ » du poly-sulfure dans la porosité du catalyseur, en présence d'au moins un additif possèdant des propriétés de réducteur et qui est choisi dans le groupe constitué par les aldéhydes renfermant 4 à 14 atomes de carbone par molécule (et de préférence 5 à 12 atomes de carbone), les cétones ou polycétones renfermant 3 à 18 (et de préférence 5 à 12) atomes de carbone par molécule, les éthers renfermant 5 à 14 (de préférence 6 à 12) atomes de carbone par molécule, les alcools ou polyalcools renfermant 5 à 14 (et de préférence 6 à 12) atomes de carbone par molécule et les acides ou les polyacides organiques renfermant 3 à 14 (et de préférence 6 à 12 atomes de carbone par molécule).

On utilisera, en poids, avantageusement 0,4 à 8 % de préférence 0,8 à 4 % et plus particulièrement 0,9 à 3 % de l'additif ou des additifs choisis par rapport au poids du polysulfure ou des polysulfures utilisés.

Le ou les additifs peuvent être ajoutés, par exemple, avec la solution du ou des polysulfures utilisés, soit à l'état pur, soit dissous dans un solvant adéquat. Ce solvant peut être du même type que le solvant choisi pour dissoudre le polysulfure, à savoir, par exemple :

une essence légère bouillant par exemple entre environ 60 et 95 °C,

une essence de type hexane bouillant entre 63 et 68 °C environ,

une essence de type F bouillant entre environ 100 et 160 °C et contenant généralement 10 à 20 % d'hydrocarbures aromatiques, par exemple 15 % (en volume),

une essence de type « white spirit » bouillant entre environ 150 et 250 °C et renfermant généralement 14 à 22 % d'hydrocarbures aromatiques, par exemple 17 %, en volume,

toute coupe hydrocarbonée ou non, équivalente aux essences précédentes.

L'additif ou les additifs selon l'invention, peuvent être utilisés dans un autre solvant tel que, par exemple, les alcools (méthanol, éthanol, propanol, etc...) ou d'autres liquides minéraux ou organiques connus pour dissoudre les aldéhydes, les cétones, les éthers, les alcools, polyalcools, acides et polyacides utilisables selon la présente invention.

A titre d'aldéhydes, on citera, par exemple, le propanal, le butanal, l'éthyl-2 butanal, le phénoxy-2-propanal, le méthyl-3 butanal, le méthyl-2 pentanal, l'éthyl-2 hexanal, l'heptanal, l'octanal, le nonanal, le décanal, le dodécanal, le diméthyl acétal dodécanal etc...

A titre de cétones, on peut citer par exemple, l'acétone, le butanone-2, la méthyl-3 butanone-2, la pentanone-2, la pentanone-3, l'hexanone-2, la diméthyl-3,3 hexanone-2, la diméthyl-3,4 hexanone-2, l'hexanone-3, la diméthyl-3,4 hexanone-3, la diméthyl-2,5 hexanone-3, la diméthyl-4,4 hexanone-3, la méthyl-3 hexanone-2, la méthyl-4 hexanone-2, la méthyl-5 hexanone-2, la méthyl-4 hexanone-3, la méthyl-5 hexanone-3, la phényl-1 hexanone-1, l'heptanone-2, l'heptanone-3, l'heptanone-4, la diméthyl-2,6 heptanone-4, l'isopropyl heptanone-2, la méthyl-3 heptanone-2, la méthyl-6 heptanone-3, la méthyl-2 heptanone-4, la phényl-1 heptanone-1, l'octanone-2, l'octanone-3, l'octanone-4, la méthyl-7 octanone-4, la nonanone-2, la nonanone-4, la nonanone-5, la décanone-2, la décanone-3, la décanone-4, la dodécanone-2, la phényl-1, dodécanone-1.

On peut utiliser des aldéhydes ou des cétones insaturés. On citera à titre d'exemples le buténal-2, le pentène-3 one-2, la pentène-1 diméthyl-5,5 phényl-1 one-3, l'heptène-3 one-3, l'heptène-5 one-2 méthyl-6.

Comme polycétones, on peut utiliser par exemple, la butanedione-2,3 (dicétone) (diméthylglyoxal) ; la pentadione-2,3 ; la pentadione-2,4 (acétylacétone) ; la diméthyl-3,3 pentadione-2,4 ; l'éthyl-3, pentadione-2,4 ; l'hexanédione-2,5 (acétylacétone) ; la diphényl-1,6 hexanédione-1,6 ; la tétraméthyl-2,2, 5,5 hexadione-3,4 ; l'heptanedione-2,4 ; l'heptanetrione-2,4,6 ; l'octanedione-2,3 ; l'octanedione-2,7 l'octanedione-3,6 ; l'octanedione-4,5 ; la tétraméthyl-2,2,7,7 octanédione-3,6 ; la diphényl-1,4 butène-2 dione-1,4 (dicétone éthylénique) etc...

A titre d'éther, on citera par exemple :

le diméthyl éther, le diéthyl éther, le méthyl éthyl éther, le méthyl butyl éther, le méthyl t-butyl éther, le méthyl-2 éthyl hexyl éther, l'éthyl butyl éther, l'éthyl t-butyl éther, le di n-propyl éther, l'éther isoamylique, le furanne, le tétrahydrofuranne, le dioxanne, etc...

A titre d'alcool, on citera par exemple : le n-butanol, l'isobutanol, le pentanol-1, le pentanol-2, le méthyl-2-butanol-4, le méthyl-2 butanol-3, les hexanols, les méthyl-pentanols, les diméthyl-butanols, les heptanols, les octanols ou les alcools amyliques $C_5H_{11}OH$.

A titre d'acide, on citera par exemple ceux qui correspondent aux aldéhydes, cétones et/ou alcools nommés ci-dessus. On peut citer l'acide lactique et l'acide citrique.

Le rôle de l'additif utilisé selon la présente invention, est en raison d'un phénomène de synergie entre ledit additif et l'hydrogène mis en jeu, de pouvoir augmenter, au cours de l'étape de réduction, le degré de réduction des oxydes métalliques, de réduire ces oxydes beaucoup plus vite, de favoriser ainsi la cinétique du remplacement d'oxygène par le soufre et de favoriser en outre la dispersion des métaux dans le catalyseur.

En conséquence, le démarrage des réactions proprement dites de raffinage ou d'hydroconversion d'hydrocarbures se trouvera accéléré.

## Exemples

Les tests effectués ont pour but de préparer une charge catalytique facilement manipulable, de réduire les coûts d'investissement pour obtenir un rendement économiquement viable, de pouvoir s'appuyer sur les installations de régénération ex-situ et faire faire une économie de temps au raffineur tout en facilitant la remise en œuvre de la charge catalytique.

On rappelle que la base de la sulfuration d'un catalyseur conformément au procédé de l'invention, reste la même que dans l'art antérieur, à savoir l'utilisation d'un mélange d'hydrogène et d'hydrogène sulfuré :

$$MoO_3 + 2H_2S + H_2 \longrightarrow MoS_2 + 3H_2O + \vec{Q} \quad (1)$$

$$9CoO + 8H_2S + H_2 \longrightarrow Co_9S_8 + 9H_2O + \vec{Q} \quad (2)$$

$$3NiO + 2H_2S + H_2 \longrightarrow Ni_3S_2 + 3H_2O + \vec{Q} \quad (3)$$

La source de soufre pour produire $H_2S$ provient, conformément à l'invention d'un produit sulfuré particulier (polysulfure) déjà présent dans le catalyseur.

Le principe de l'invention consiste à charger le catalyseur par ce dit produit sulfuré (polysulfure). Ceci se fait par adsorption de ce composé dans la porosité du catalyseur. Le catalyseur ainsi traité est activé ultérieurement dans le réacteur de la raffinerie par passage d'hydrogène chauffé à 80 °C (entre 80 et 200 °C). Le produit sulfuré libère $H_2S$, la sulfuration des oxydes s'opère alors conformément aux techniques connues.

Le composé soufré d'imprégnation du catalyseur est choisi en fonction de sa dimension moléculaire ; en effet, il existe des composés soufrés (polysulfures) dont les dimensions sont de quelques Angströms, voire dizaines d'Angströms c'est-à-dire de la taille des micropores des supports alumineux ou silico alumineux.

Quelques essais ont été faits sur un catalyseur neuf KETJEN 165/1.5 E, calciné à 550 °C, ou HR 306 (PRO-CATALYSE).

Cinq agents de sulfuration ont été successivement testés :

DMS : diméthylsulfure
nBM : n butyl mercaptan
TNPS : diter nonylpolysulfure de PENWALT (37 % poids de S environ)
TPS 32 : de ELF AQUITAINE (32 % poids de S environ)
TPS 37 : de ELF AQUITAINE (37 % poids de S environ)

La manipulation s'effectue en immergeant une quantité donnée de catalyseur dans un volume excessif de réactif. L'imprégnation dure 1 heure.

Le catalyseur ainsi traité est ensuite porté pendant 1 heure dans l'air à différentes températures : 80 °C, 100 °C et 150 °C, pour étudier la tenue du produit à ces températures.

On obtient les résultats suivants : (avec TPS 37, on a obtenu des résultats sensiblement équivalents à ceux obtenus avec TNPS).

| Echantillon | | DMS | nBM | TNPS | TPS 32 |
|---|---|---|---|---|---|
| 80°C | S | 0,88 | 3,12 | 10,60 | 9,56 |
| | C | - | - | 3,95 | 2,82 |
| 100°C | S | - | 1,72 | 10,33 | 9,68 |
| | C | - | - | 3,74 | 2,40 |
| 150°C | S | - | - | 3,49 | 2,33 |
| | C | - | - | 2,94 | 1,61 |

Seuls les polysulfures ont une bonne tenue à l'élévation de température. Leur dissociation et partant leur élimination intervient cependant à 150 °C.

La poursuite des essais s'est donc effectuée sur les polysulfures, qui, entre autres, présentent l'avantage de ne pas être très odorants, à l'inverse du DMS et du nBM. Par ailleurs les polysulfures ne présentent absolument aucun caractère toxique ce qui n'est évidemment pas le cas des mercaptans voire des sulfures organiques.

Des essais de mise au point du procédé de sulfuration ont été effectués sur le TPS 32 et le TNPS qui

sont comparables eu égard à leur teneur en soufre (environ 32 % poids).

Les polysulfures étant des produits très visqueux et épais, on a procédé à leur dilution pour pouvoir les utiliser, le solvant utilisé étant ici le white spirit (température d'ébullition entre 150 et 250 °C).

On utilise la stœchiométrie en soufre pour sulfurer la totalité des oxydes ($MoO_3$, CoO) soit dans le cas présent 7,5 % de S.

Pour que l'ensemble du polysulfure soit adsorbé, il faut utiliser un volume de réactif (polysulfure + solvant) égal au volume d'imprégnation de la charge de catalyseur traité. C'est la connaissance de ce volume poreux total, ou volume d'imprégnation, qui détermine la quantité de solvant à utiliser. Dans le cadre des présents essais, ce volume est de 45 ml pour 100 g de catalyseur en moyenne (50 % de solvant et 50 % de polysulfure).

Le polysulfure dilué est ajouté à la prise d'essai à froid. Un essai est effectué sous atmosphère d'azote, un autre à l'air ambiant.

Le catalyseur est ensuite séché à 100 °C soit sous courant d'azote, soit sous courant d'air.

Les résultats obtenus sur le catalyseur KETJEN K 165/1,5E traité par le TNPS sont les suivants :

Perte au feu à 500 °C (P.A.F. à 500 °C)
avant traitement : 0,81 %
après traitement :
azote : 26,76 %
air : 25,52 %

Analyse carbone et soufre sur le catalyseur imprégné.

| | avant traitement | après traitement | |
|---|---|---|---|
| | | azote | air |
| S % | 0,38 | 7,97 | 8,57 |
| C % | 0,08 | 5,20 | 6,50 |

Au vu de ces résultats (en particulier les valeurs des P.A.F. à 500 °C), on peut dire que le catalyseur, qu'il soit traité sous air, ou sous azote, est en moyenne imprégné à 20 % de TNPS (qui contient environ 37 % de S) soit 7,4 % de soufre en poids de catalyseur sec et oxydé, ce qui correspond au but recherché.

Les résultats obtenus avec le TPS 32 comme le TPS sont sensiblement équivalents.

L'activation des catalyseurs précédemment traités, est effectuée en faisant passer un courant d'hydrogène à 150 °C au travers d'un lit de catalyseur imprégné de polysulfure.

Quand le lit a atteint 130 °C, la réaction démarre et la température et monte jusqu'à 135 °C.

Le catalyseur devient noir, ceci est dû aux sulfures métalliques formés.

L'analyse du catalyseur sulfuré au TNPS donne comme valeur en soufre 8,50 % ainsi qu'une valeur en carbone de 4,2 %.

On répète les essais précédents sur TNPS comme indiqué précédemment. Toutefois, ici, on ajoute aux 45 ml du mélange 50-50 white spirit et TNPS, 3 % de dicétone

$$CH_3 - \underset{\underset{O}{\|}}{C} - \underset{\underset{O}{\|}}{C} - CH_3$$

en poids par rapport au TNPS.

A l'issue de l'activation du catalyseur, l'analyse du catalyseur sulfuré au TNPS donne comme valeur en soufre 8,50 %. La valeur en carbone résiduel est tombée ici à 1 % environ. Cette teneur en carbone résiduel est également de 1 % environ en utilisant à la place de dicétone, 3 % en poids d'acétylacétone.

Cette meilleure élimination du carbone résiduel se traduit au cours des tests d'activité par de meilleurs résultats catalytiques tant en terme d'hydrodésulfuration qu'en terme d'hydrodénitrification. De plus, la stabilité des activités est améliorée notamment dans les tests de longue durée (plusieurs centaines d'heures dans les unités pilotes).

Le TPS 32, traité avec ou sans promoteur comme indiqué ci-dessus, permet d'obtenir des résultats comparables.

**Revendications**

1. Procédé de traitement d'un catalyseur neuf ou régénéré renfermant un support à base d'au moins un oxyde d'un métal ou d'un métalloïde et au moins un métal actif, réalisé en l'absence d'hydrogène et

consistant à traiter ledit catalyseur à l'aide d'au moins un agent de sulfuration utilisé en solution dans un solvant, ledit agent ayant la formule :

$$R—S_{(n)}—R'$$

où n est un nombre entier de 3 à 20 et où les radicaux R et R', identiques ou différents, représentent chacun un radical organique renfermant 1 à 150 atomes de carbone par molécule, ces radicaux étant choisis dans le groupe constitué par les radicaux alkyles, saturés ou insaturés, linéaires ou ramifiés, ou de type naphténique, les radicaux aryles, les radicaux alkylaryles et les radicaux arylalkyles, R' pouvant aussi représenter l'atome d'hydrogène.

2. Procédé selon la revendication 1 de traitement d'un catalyseur, en vue d'effectuer ultérieurement, en présence d'hydrogène, la sulfuration totale ou partielle, c'est-à-dire, en quantités stœchiométriques ou non, du ou des métaux dits actifs entrant dans la composition du catalyseur, le procédé étant caractérisé en ce que ledit catalyseur, neuf ou régénéré, est traité « ex-situ » à l'aide d'au moins ledit agent de sulfuration que l'on introduit entre 0 et 50 °C en quantités requises dans la porosité du catalyseur.

3. Procédé selon l'une des revendications 1 et 2 de sulfuration partielle ou totale d'un métal actif ou d'au moins un des métaux actifs entrant dans la composition d'un catalyseur renfermant (a) un support à base d'au moins un oxyde d'un métal ou d'un métalloïde et (b) au moins un métal dit actif, le procédé de sulfuration étant caractérisé en ce que dans une première étape réalisée « ex situ » et en l'absence d'hydrogène, on traite le catalyseur à l'aide au moins dudit agent de sulfuration, et en ce que dans une deuxième étape, réalisée « in situ », qui est l'étape d'activation du catalyseur effectuée en présence d'hydrogène, on traite le catalyseur obtenu en première étape par de l'hydrogène pour fixer la quantité requise de soufre sur le ou les métaux entrant dans la composition dudit catalyseur.

4. Procédé selon l'une des revendications 1 à 3 appliqué soit au traitement d'un catalyseur neuf, préalablement à son emploi, soit appliqué au traitement d'un catalyseur, préalablement à son emploi, ledit catalyseur venant d'être soumis à une régénération hors site.

5. Procédé selon l'une des revendications 1 à 4 dans lequel l'agent de sulfuration est le ditertiododécylpolysulfure ou le ditertiononylpolysulfure.

6. Procédé selon la revendication 3 dans lequel la deuxième étape, dite d'activation du catalyseur et réalisée in situ, est effectué au moyen d'hydrogène auquel on ajoute environ 0,1 à 1 % d'eau en volume.

7. Procédé selon l'une des revendications 1 à 6, dans lequel ledit solvant dans lequel est dissous l'agent de sulfuration est choisi dans au moins un des solvants du groupe constitué par une essence légère bouillant entre environ 60 et 95 °C, une essence de type hexane bouillant entre environ 63 et 68 °C, une essence dite de type F bouillant entre environ 100 et 160 °C (et renfermant 10 à 20 % en volume, d'hydrocarbures aromatiques) et une essence du type « white spirit » bouillant entre environ 150 et 250 °C (et renfermant environ 14 à 22 %, en volume, d'hydrocarbures aromatiques).

8. Procédé selon l'une des revendications 1 à 7, caractérisé en ce que l'on opère en présence de 0,4 à 8 % en poids par rapport au poids de polysulfure d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

9. Procédé selon la revendication 8 dans lequel le poids d'additif(s) utilisé(s) représente 0,8 à 4 % par rapport au poids du ou des polysulfures utilisés, l'additif étant choisi dans le groupe constitué par l'acétylacétone, le dicétone, l'acétonyl acétone, l'acide lactique et l'acide citrique.

**Claims**

1. A process for the treatment of a new or regenerated catalyst containing (a) a carrier having as basis at least one metal or metalloid oxide and (b) one active metal, conducted in the presence of hydrogen and consisting of treating said catalyst with at least one sulfurization (sulfining) agent used as a solution in a solvent, said agent having the formula :

$$R—S_{(n)}—R'$$

wherein n is an integer from 3 to 20 and the radicals R and R', indentical or different, are each an organic radical containing 1 to 150 carbon atoms per molecule, said radicals being selected from the group consisting of alkyl, saturated or unsatured, linear or branched radicals or radicals of the naphthenic type, aryl radicals, alkylaryl radicals and arylalkyl radicals, R' being optionally a hydrogen atom.

2. A process according to claim 1 for the treatment of a catalyst in order to proceed subsequently, in the presence of hydrogen, to a total or partial sulfuration, i. e. in a stoichiometrical or non stoichiometrical amount, of the one or more active metals included in the catalyst composition, said process consisting of treating the new or regenerated catalyst « ex situ » by means of at least the said sulfuration agent introduced between 0 and 50 °C, in the required amount, into the catalyst pores.

3. A process according to one of claims 1 and 2, for the partial or total sulfurization of an active metal or at least one of the active metals included in the composition of a catalyst containing (a) a carrier with, as basic material, at least one metal or metalloid oxide and (b) at least one so called active metal, the sulfurization process being characterized in that, in the first step effected « ex situ » and in the absence of hydrogen, the catalyst is treated with at least the said sulfurization agent, and in that in a second step, effected « in situ », which is the step of catalyst activation in the presence of hydrogen, the catalyst obtained in the first step is treated with hydrogen to fix the required amount of sulfur on the one or more metals included in the composition of said catalyst.

4. A process according to one of claims 1 to 3, applied either to the treatment of a new catalyst, before its use, or applied to the treatment of a catalyst, prior to its use, said catalyst having just been subjected to a regeneration « ex situ ».

5. A process according to one of claims 1 to 4, wherein the sulfurization agent is ditert-dodecylpolysulfide, or ditert-nonylpolysulfide.

6. A process according to claim 3, wherein the second step « in situ » of catalyst activation is effected by means of hydrogen with the addition of about 0.1 to 1 % by volume of water.

7. A process according to one of claims 1 to 6, wherein said solvent in which is dissolved the sulfurization agent is selected from at least one of the solvents of the group consisting of a light gasoline boiling between about 60 and 95 °C, a gasoline of the hexane type boiling between about 63 and 68 °C, a gasoline of the so-called F type boiling between about 100 and 160 °C (and containing 10 to 20 % by volume of aromatic hydrocarbons) and a gasoline of the « white spirit » type, boiling between about 150 and 250 °C (and containing about 14 to 22 % by volume of aromatic hydrocarbons).

8. A process according to one of claims 1 to 7, the process being characterized in that the operation is performed in the presence of from 0.4 to 8 % by weight in proportion to the polysulfide weight, of at least one additive selected from the group consisting of aldehydes containing 4 to 14 carbon atoms per molecule, ketones or polyketones containing 3 to 18 carbon atoms per molecule, ethers containing 5 to 14 carbon atoms per molecule, alcohols or polyalcohols containing 5 to 14 carbon atoms per molecule and organic acids or polyacids containing 3 to 14 carbon atoms per molecule.

9. A process according to claim 8, wherein the weight of additive(s) is from 0.8 to 4 % with respect to the weight of the one or more polysulfide(s) involved, the additive being selected from the group consisting of acetylacetone, diketone, acetonyl acetone, lactic acid and citric acid.

**Patentansprüche**

1. Verfahren zur Behandlung eines neuen oder regenerierten Katalysators, der einen Träger auf der Basis von zumindest einem Oxid eines Metalls oder nicht-Metalls und zumindest ein aktives Metall enthält, das in Abwesenheit von Wasserstoff durchgeführt wird und darin besteht, diesen Katalysator mit Hilfe von zumindest einem Schwefelungsmittel, das in Lösung in einem Lösungsmittel verwendet wird, zu behandeln, wobei dieses Mittel folgende Formel hat :

$$R—S_{(n)}—R'$$

worin n eine ganze Zahl von 3 bis 20 und worin die Reste R und R', die gleich oder verschieden sein können, jeweils einen organischen Rest von 1 bis 150 Kohlenstoffatomen pro Molekül darstellen, wobei die Reste aus der Gruppe gewählt sind, die besteht aus Alkylresten, die gesättigt oder ungesättigt, linear oder verzweigt sind, Resten vom naphtenischen Typ, Arylreste, Alkarylreste und Arylalkylreste, und worin R' auch ein Wasserstoffatom darstellen kann.

2. Verfahren nach Anspruch 1 zur Behandlung eines Katalysators, um letztlich in Gegenwart von Wasserstoff die gesamte oder partielle Schwefelung, d. h. in stöchiometrischen oder nicht stöchiometrischen Mengen des aktiven Metalls oder der aktiven Metalle duchzuführen, die in die Katalysatorzusammensetzung einbezogen sind, dadurch gekennzeichnet, daß dieser neue oder regenerierte Katalysator « ex-situ » mit Hilfe von zumindest diesem Schwefelungsmittel behandelt wird, das man zwischen 0 und 50 °C in den benötigten Mengen in die Porosität des Katalysators einführt.

3. Verfahren nach einem der Ansprüche 1 und 2 zur partiellen oder gesamten Schwefelung eines aktiven Metalles oder zumindest eines der aktiven Metalle, die in die Katalysatorzusammensetzung einbezogen sind, welche enthält (a) einen Träger auf der Basis von zumindest einem Oxid eines Metalls oder eines nicht-Metalls und (b) zumindest ein Metall, das aktives Metall genannt wird, dadurch gekennzeichnet, daß in einer ersten Stufe, die « ex-situ » und in Abwesenheit von Wasserstoff durchgeführt wird, man den Katalysator mit Hilfe von zumindest diesem Schwefelungsmittel behandelt und daß man in einer zweiten Stufe, die « in-situ » durchgeführt wird und welche die Aktivierungsstufe des Katalysators ist, die in Gegenwart von Wasserstoff durchgeführt wird, man den in der ersten Stufe erhaltenen Katalysator mit Wasserstoff behandelt, um die erforderliche Schwefelmenge auf dem Metall oder den Metallen zu binden, die in die Zusammensetzung dieses Katalysators einbezogen sind.

4. Verfahren nach einem der Ansprüche 1 bis 3, dadurch gekennzeichnet, daß es entweder auf die Behandlung eines neuen Katalysators vor seiner Verwendung oder auf die Behandlung eines Katalysators, der gerade einer Regenerierung außerhalb der Anlage unterworfen wurde, vor seiner Verwendung angewandt wird.

5. Verfahren nach einem der Ansprüche 1 bis 4, dadurch gekennzeichnet, daß das Schwefelungsmittel di-tert.-Joddecylpolysulfid oder di-tert.-Nonylpolysulfid ist.

6. Verfahren nach Anspruch 3, dadurch gekennzeichnet, daß die zweite Stufe, die Aktivierung des Katalysators genannt und in situ durchgeführt wird, mittels Wasserstoff erfolgt, dem man etwa 0,1 bis 1 Vol.-% Wasser zufügt.

7. Verfahren nach einem der Ansprüche 1 bis 6, dadurch gekennzeichnet, daß das Lösungsmittel, in welchem das Schwefelungsmittel gelöst ist, aus zumindest einem der Lösungsmittel der Gruppe gewählt wird, die aus Leichtbenzin, das zwischen etwa 60 und 95 °C siedet, einem Benzin vom Typ Hexan, das zwischen etwa 63 und 68 °C siedet, einem Benzin, das Typ F genannt wird und zwischen etwa 100 und 160 °C siedet (und 10 bis 20 Vol.-% aromatische Kohlenwasserstoffe enthält), und einem Benzin des Typs « white spirit », das zwischen etwa 150 und 250 °C siedet (und etwa 14 bis 22 Vol.-% aromatische Kohlenwasserstoffe enthält), besteht.

8. Verfahren nach einem der Ansprüche 1 bis 7, dadurch gekennzeichnet, daß man in Gegenwart von 0,4 bis 8 Gew.-%, bezogen auf Gewicht an Polysulfid, von zumindest einem Zusatz arbeitet, der aus der Gruppe gewählt ist, die aus den Aldehyden mit 4 bis 14 Kohlenstoffatomen pro Molekül, den Ketonen oder Polyketonen mit 3 bis 18 Kohlenstoffatomen pro Molekül, den Äthern mit 5 bis 14 Kohlenstoffatomen pro Molekül, den Alkoholen oder Polyalkoholen mit 5 bis 14 Kohlenstoffatomen pro Molekül und den organischen Säuren oder Polysäuren mit 3 bis 14 Kohlenstoffatomen pro Molekül besteht.

9. Verfahren nach Anspruch 8, dadurch gekennzeichnet, daß das Gewicht des verwendeten Zusatzes oder der verwendeten Zusätze 0,8 bis 4 %, bezogen auf Gewicht des verwendeten Polysulfids oder der verwendeten Polysulfide beträgt, wobei der Zusatz aus der Gruppe gewählt ist, die aus Acetylaceton, Diketon, Acetonylaceton, Milchsäure und Zitronensäure besteht.